Europäisches Patentamt

European Patent Office

Office européen des brevets

(11) Veröffentlichungsnummer: **0 401 905**
**A2**

## EUROPÄISCHE PATENTANMELDUNG

(21) Anmeldenummer: **90201384.6**

(22) Anmeldetag: **31.05.90**

(51) Int. Cl.5: **G11B 5/55**

(30) Priorität: **06.06.89 AT 1384/89**

(43) Veröffentlichungstag der Anmeldung:
**12.12.90 Patentblatt 90/50**

(84) Benannte Vertragsstaaten:
**DE FR GB**

(71) Anmelder: **N.V. Philips' Gloeilampenfabrieken**
**Groenewoudseweg 1**
**NL-5621 BA Eindhoven(NL)**

(72) Erfinder: **Veigl, Johann**
**Int. OCTROOIBUREAU B.V., p/A Prof.**
**Holstlaan 6**
**NL-5656 AA Eindhoven(NL)**

(74) Vertreter: **Van Weele, Paul Johannes Frits et**
**al**
**INTERNATIONAAL OCTROOIBUREAU B.V.**
**Prof. Holstlaan 6**
**NL-5656 AA Eindhoven(NL)**

(54) **Magnetbandgerät mit einem Magnetkopf.**

(57) Ein Magnetbandgerät (1) mit einem wendbaren Magnetkopf (28) weist einen verdrehbaren, zwischen zwei Betriebslagen wendbaren Kopfträger (36) auf, der in einer Lageröffnung (46) einer Lagereinrichtung (45) mit Spiel drehbar gelagert ist. Die Lagereinrichtung (45) ist im Bereich der Lageröffnung (46) mit Freistellungen (58, 59, 60, 61, 62) für den Kopfträger (36) versehen und in seinen beiden Betriebslagen ist der Kopf träger (36) ausschließlich gegen zwei vorgegebene Lagerstellen (96, 97 bzw. 96, 98) in der Lageröffnung (46) gedrückt, wobei diese Lagerstellen (96, 97, 98) im Querschnitt der Lageröffnung (46) gesehen punktförmig ausgebildet sind

FIG.3

EP 0 401 905 A2

## Magnetbandgerät mit einem Magnetkopf

Die Erfindung betrifft ein Magnetbandgerät mit einem Magnetkopf, der im wesentlichen um 180° zwischen zwei Abtastpositionen wendbar ist, die je einer von zwei entgegengesetzten Bandlaufrichtungen zugeordnet sind und in denen der Magnetkopf je mindestens eine Spur eines Magnetbandes abtastet, mit einem den Magnetkopf tragenden verdrehbaren Kopfträger, mit einer Lagereinrichtung mit einer Lageröffnung, in der der Kopfträger mit Spiel drehbar gelagert ist, mit einer Verstelleinrichtung für den Kopfträger, mit der zum Wenden des Magnetkopf es zwischen seinen beiden Abtastpositionen der Kopfträger zwischen zwei Betriebs lagen verdrehbar ist, mit Positioniereinrichtungen am Kopfträger und im Gerät, mit denen der Kopfträger in seinen beiden Betriebslagen positioniert wird, und mit mindestens einer Belastungseinrichtung, die den Kopfträger in seinen beiden Betriebslagen mit einer Lagerfläche desselben in der Lageröffnung gegen die Lagereinrichtung drückt und die die Positioniereinrichtungen am Kopfträger und im Gerät gegeneinander drückt.

Bei einem im Handel erhältlichen bekannten Gerät der vorstehend angeführten Gattung ist die Lageröffnung in der Lagereinrichtung hohlzylindrisch ausgebildet und sie umschließt eine zylindrisch ausgebildete Lagerf läche des Kopfträgers zur Gänze. Aufgrund der hohlzylindrischen Ausbildung der Lageröffnung und des vorhandenen Spiels zwischen der hohlzylindrischen Lageröffnung und der zylindrischen Lagerfläche des Kopfträgers findet die Lagerf läche am Ende des Verdrehens des Kopfträgers in seine jeweilige Betriebslage nicht immer dieselbe Anlagestelle in der hohlzylindrischen Lageröffnung, so daß der Kopfträger nicht auf eindeutig reproduzierbare Weise in stets dieselbe jeweilige Betriebslage bringbar ist. Dies hat aber zur Folge, daß der von dem Kopfträger getragene Magnetkopf nicht auf eindeutig reproduzierbare Weise in stets dieselbe jeweilige Abtastposition bringbar ist, was im Hinblick auf stets gleichbleibend gute Abtastverhältnisse durch den Magnetkopf nachteilig ist.

Die Erfindung hat sich zur Aufgabe gestellt, die vorstehend angeführten Schwierigkeiten zu vermeiden und ein Gerät der eingangs angeführten Gattung so auszubilden, daß der Magnetkopf auf eindeutig reproduzierbare Weise in stets dieselbe jeweilige Abtastposition bringbar ist. Hiefür ist die Erfindung dadurch gekennzeichnet, daß die Lagereinrichtung im Bereich der Lageröffnung mit Freistellungen für den Kopfträger versehen ist und daß in den beiden Betriebslagen des Kopfträgers derselbe mit seiner Lagerfläche ausschließlich gegen zwei vorgegebene Lagerstellen in der Lageröffnung gedrückt wird, wobei der Kopfträger und die Lagereinrichtung an den Lagerstellen im Querschnitt der Lageröffnung gesehen im wesentlichen punktförmig aneinander liegen. Auf diese Weise ist erreicht, daß am Ende des Verdrehens des Kopfträgers in seine jeweilige Betriebslage die Lagerf läche des Kopfträgers stets an denselben beiden vorgegebenen Lagerstellen in der Lageröffnung der Lagereinrichtung im Querschnitt der Lageröffnung gesehen im wesentlichen punktförmig anliegt. Der Kopfträger ist somit auf eindeutig reproduzierbare Weise in stets dieselbe durch die beiden Lagerstellen definierte jeweilige Betriebslage bringbar und in derselben von der Belastungseinrichtung gehalten. Hiedurch ist vorteilhafterweise erreicht, daß der von dem Kopfträger getragene Magnetkopf auf eindeutig reproduzierbare Weise in stets dieselbe jeweilige Abtastposition bringbar und in derselben gehalten ist, so daß stets gleichbleibend gute Abtastverhältnisse durch den Magnetkopf gewährleistet sind.

Die vorgegebenen Lagerstellen können durch kalottenförmige oder teilzylindrische Erhebungen gebildet sein, die von der Lagereinrichtung in deren Lageröffnung hineinragen. Derartige Lagerstellen sind aber relativ schwierig herzustellen und unterliegen einem relativ großen Verschleiß. Als vorteilhaft hat sich daher erwiesen, wenn die Lageröffnung zumindest teilweise durch geradlinig verlaufende Begrenzungswände begrenzt ist, die den Kopfträger mit Spiel tangieren und an denen die vorgegebenen Lagerstellen vorgesehen sind. Dies ist im Hinblick auf einen geringen Verschleiß und eine möglichst einfache Ausbildung der vorgegebenen Lagerstellen vorteilhaft.

In diesem Zusammenhang hat sich als besonders vorteilhaft erwiesen, wenn die Lageröffnung zwei senkrecht zu den beiden Bandlaufrichtungen verlaufende Begrenzungswände und eine parallel zu den beiden Bandlaufrichtungen verlaufende Begrenzungswand aufweist, an welchen drei Begrenzungswänden die vorgegebenen Lagerstellen vorgesehen sind. Dies ist im Hinblick auf eine möglichst einfache Herstellung der Lageröffnung insbesondere in Kunststofftechnik vorteilhaft, weil hiedurch eine einfache Entformbarkeit gewährleistet ist.

Die von dem Magnetband auf den Magnetkopf ausgeübten Reibkräfte können dem von der Belastungseinrichtung bewirkten Andrücken des Kopf trägers mit seiner Lagerfläche an die betreffenden Lagerstellen in der Lageröffnung der Lagereinrichtung entgegenwirken, wobei dann die Gefahr besteht, daß bei sehr hohen derartigen Reibkräften der Kopfträger von den betreffenden Lagerstellen abgehoben werden kann, was eine Verstellung des Magnetkopfes aus seiner jeweiligen Abtastposition zur Folge hat. Als vorteilhaft hat sich daher erwiesen, wenn in den beiden Betriebslagen des Kopf trägers die von dem Magnetband auf den Magnetkopf ausgeübte Reibkraft das von der Belastungseinrichtung bewirkte Andrücken des Kopf trägers an mindestens eine der Lagerstellen in der Lageröffnung unterstützt. Auf diese Weise ist erreicht, daß selbst bei sehr hohen auf den Magnetkopf einwirkenden Reibkräften der Magnetkopf stets in seiner jeweiligen Abtastposition gehalten bleibt.

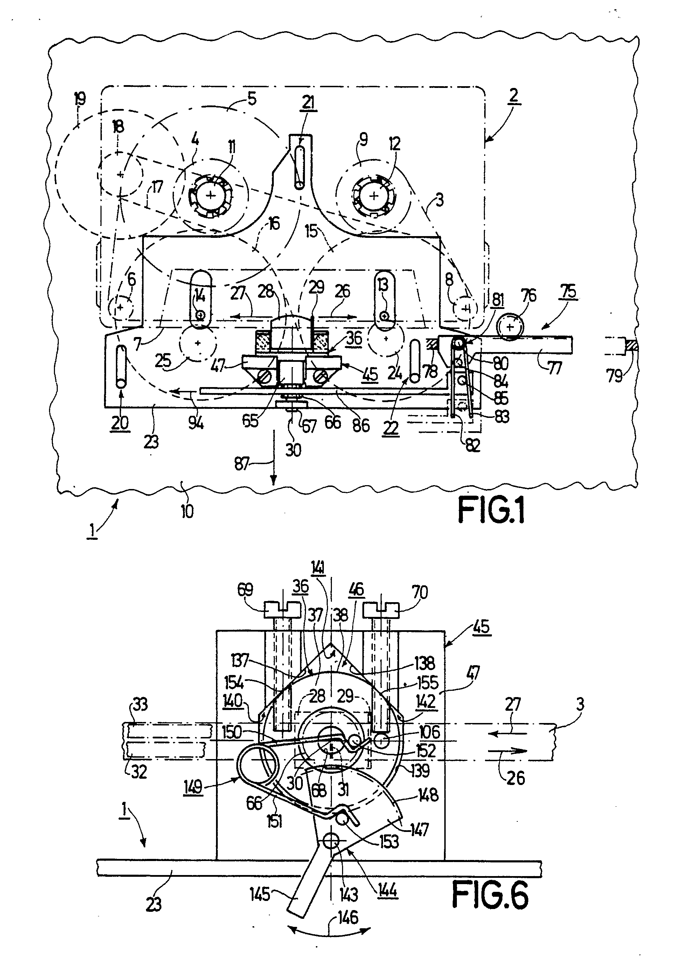

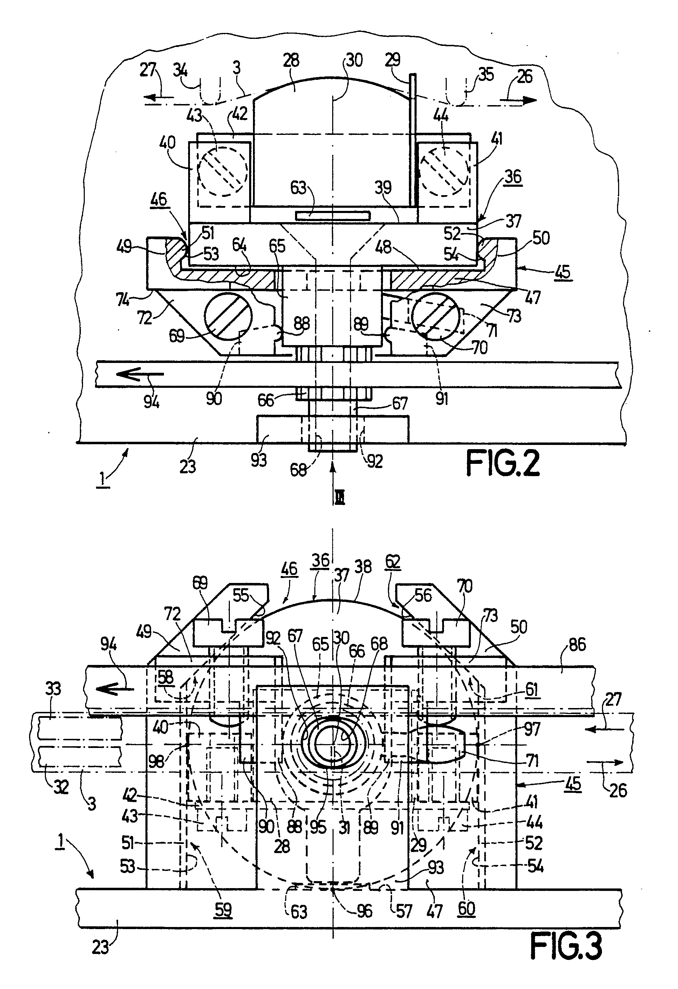

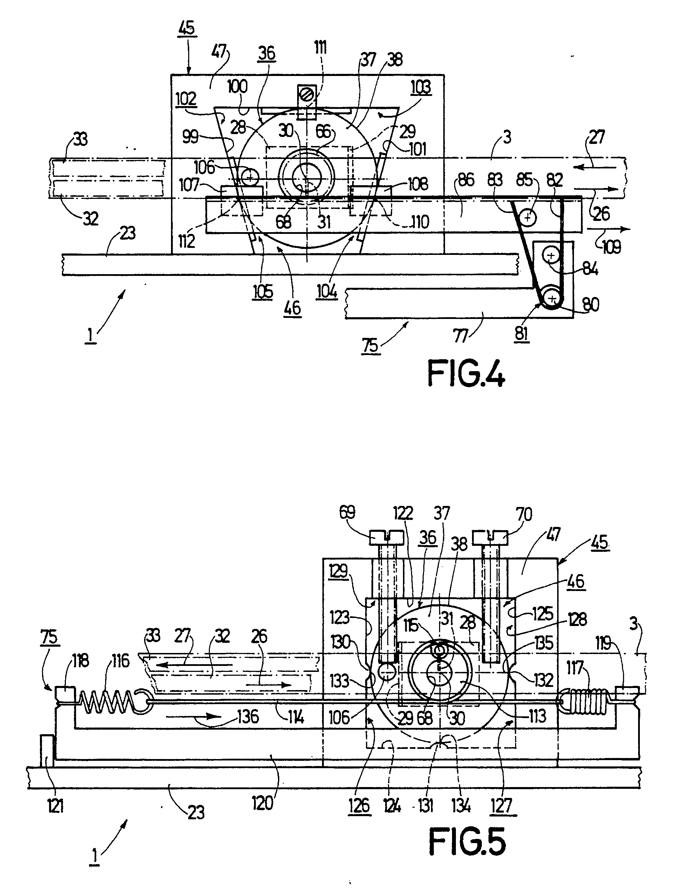

Die Erfindung wird im folgenden anhand von einigen Ausführungsbeispielen näher beschrieben, auf die die Erfindung jedoch nicht beschränkt sein soll. Die Fig.1 zeigt schematisch in Draufsicht einen für die Erfindung wesentlichen Teil eines Magnetbandgerätes gemäß einem ersten Ausführungsbeispiel der Erfindung, mit dem ein in entgegengesetzten Bandlaufrichtungen antreibbares Magnetband abtastbar ist und das zum Abtasten des Magnetbandes einen um 180° zwischen zwei Abtastpositionen wendbaren Magnetkopf zum Aufzeichnen und Wiedergeben aufweist. Die Fig.2 zeigt in einem gegenüber der Fig.1 größeren Maßstab in Draufsicht ein Detail des Gerätes gemäß Fig.1 mit dem wendbaren Magnetkopf, der von einem verdrehbaren Kopfträger getragen ist, der in einer Lageröffnung einer Lagereinrichtung des Gerätes mit Spiel drehbar gelagert ist. Die Fig.3 zeigt das Detail gemäß Fig.2 in einer Seiten ansicht gemäß dem Pfeil III in Fig.2. Die Fig.4 zeigt analog wie die Fig.3 ein Detail eines Magnetbandgerätes gemäß einem zweiten Ausführungsbeispiel der Erfindung. Die Fig.5 zeigt analog wie die Figuren 3 und 4 ein Detail eines Magnetbandgerätes gemäß einem dritten Ausführungsbeispiel der Erfindung. Die Fig.6 zeigt analog wie die Figuren 3, 4 und 5 ein Detail eines Magnetbandgerätes gemäß einem vierten Ausführungsbeispiel der Erfindung.

Die Fig.1 zeigt einen Teil eines Magnetbandgerätes 1, in das eine in Fig.1 schematisch mit strichpunktierten Linien dargestellte Kassette 2 einsetzbar ist. Hiefür weist das Gerät 1 beispielsweise eine nicht dargestellte wannenförmige Kassettenaufnahme auf. In der Kassette 2 ist ein Magnetband 3 untergebracht. Das Magnetband 3 ist von einem ersten Wickelkern 4, auf den im dargestellten Zustand das Magnetband 3 zu einem Bandwickel 5 aufgewickelt ist, über eine Bandführung 6 und längs einer langen Kassettenschmalseite 7 und über eine weitere Bandführung 8 zu einem zweiten Wickelkern 9 geführt.

Das Magnetbandgerät 1 weist ein im wesentlichen plattenförmiges Chassis 10 auf. Auf dem Chassis 10 ist ein erster rotierend antreibbarer Wickeldorn 11 zum rotierenden Antreiben des ersten Wickelkernes 4 und ein zweiter rotierend antreibbarer Wickeldorn 12 zum rotierenden Antreiben des zweiten Wickelkernes 9 drehbar gelagert. Weiters sind auf dem Chassis 10 eine erste Bandantriebswelle 13 und eine zweite Bandantriebswelle 14 drehbar gelagert. Jede der beiden Bandantriebswellen 13 und 14 ist mit einer Schwungscheibe 15 bzw. 16 drehfest verbunden. Um einen Teil der Umfangsflächen der beiden Schwungscheiben 15 und 16 ist in entgegengesetztem Windungssinn eine Pese 17 herumgeschlungen, die über ein Pesenrad 18 geführt ist. Das Pesenrad 18 ist von einem auf dem Chassis 10 befestigten Motor 19 mit konstanter Drehzahl gemäß Fig.1 entgegen dem Uhrzeigersinn antreibbar. Der zweite Wickeldorn 12 ist von der ersten Bandantriebswelle 13 her und der erste Wickeldorn 11 ist von der zweiten Bandantriebswelle 14 her antreibbar, dies in bekannter Weise über je ein wahlweise einschaltbares Zwischengetriebe, das beispielsweise aus mehreren Getrieberädern besteht und eine Rutschkupplung zum Ausgleich von Drehzahlunterschieden aufweist.

Weiters weist das Gerät 1 eine auf dem Chassis 10 mit drei Stift-Schlitz-Verbindungen 20, 21 und 22 senkrecht zur langen Kassettenschmalseite 7 verschiebbar geführte Trägerplatte 23 auf. Auf der Trägerplatte 23 sind eine erste und eine zweite je mit strichpunktierten Linien angedeutete, über nicht dargestellte Lagerhebel auf der Trägerplatte 23 verschwenkbar gelagerte Andruckrollen 24 und 25 vorgesehen, von denen wahlweise jeweils eine mit einer der beiden Bandantriebswellen 13 und 14 federnd in Anlage bringbar ist, wobei zwischen der betreffenden Bandantriebswelle und der betreffenden Andruckrolle sich das Magnetband 3 befindet. Auf diese Weise ist das Magnetband 3 über eine rotierend angetriebene Bandantriebswelle, gegen die das Magnetband mit der zugehörigen Andruckrolle angedrückt wird, mit konstanter Bandgeschwindigkeit antreibbar. In einer Betriebsart "Normaler Vorlauf" wird die erste Andruckrolle 24 gegen die erste Bandantriebswelle 13 gedrückt, wie dies in Fig.1 dargestellt ist. Dabei wird die erste Bandantriebswelle 13 vom Motor 19 her gemäß Fig.1 entgegen dem Uhrzeigersinn mit konstanter Drehzahl angetrieben, so daß folglich das Magnetband 3 in der mit einem Pfeil 26 bezeichneten Bandlaufrichtung angetrieben wird. Hiebei wird das Magnetband 3 auf den vom zweiten Wickeldorn 12 angetriebenen zweiten Wickelkern 9 aufgewickelt. In einer Betriebsart "Normaler Rücklauf ", auch "Reverselauf" genannt, wird die zweite Andruckrolle 25 gegen die zweite Bandantriebswelle 14 gedrückt, wobei die zweite Bandantriebswelle 14 vom Motor 19 her gemäß Fig.1 im Uhrzeigersinn angetrieben wird, so daß folglich das Magnetband 3 in der mit einem Pfeil 27 bezeichneten Bandlaufrichtung angetrieben wird. Hiebei wird dann das Magnetband 3 auf den vom ersten Wik-

keldorn 11 angetriebenen ersten Wickelkern 4 aufgewickelt.

Auf der Trägerplatte 23 des Magnetbandgerätes 1 ist weiters ein zum Aufzeichnen und Wiedergeben von Informationssignalen, beispielsweise Tonsignalen, ausgebildeter Magnetkopf 28 angebracht, mit dessen Gehäuse seitlich eine gabelförmige Bandführung 29 verbunden ist. Der Magnetkopf 28 ist um eine senkrecht zur langen Kassettenschmalseite 7 verlaufende Wendeachse 30 um 180° zwischen zwei Abtastpositionen wendbar, von denen eine in den Figuren 1 bis 3 dargestellt ist. Jede Abtastposition ist einer von den beiden entgegengesetzten Bandlaufrichtungen 26 und 27 zugeordnet. In jeder Abtastposition tastet der Magnetkopf 28 mit einem in Fig.3 schematisch angedeuteten Arbeitsspalt 31, der bezüglich der Wendeachse 30 des Magnetkopf es 28 exzentrisch liegt, einen Spurbereich des Magnetbandes 3 ab. In Fig.3 sind die beiden Spurbereiche des Magnetbandes 3 mit den Bezugszeichen 32 und 33 bezeichnet. Gemäß den Figuren 2 und 3 wird das Magnetband 3 in der Bandlaufrichtung 26 angetrieben und dementsprechend nimmt der Magnetkopf 28 jene Abtastposition ein, in der er mit seinem Magnetspalt 31 den Spurbereich 32 abtastet. Wenn das Magnetband 3· in der entgegengesetzten Bandlauf richtung 27 angetrieben wird, dann nimmt der Magnetkopf 28 die gewendete andere Abtastposition ein, in der er dann mit seinem Magnetspalt 31 den anderen Spurbereich 33 abtastet. Es sei erwähnt, daß im Falle einer monophonen Aufzeichnung beziehungsweise Wiedergabe der Magnetkopf 28 je Spurbereich 32 bzw. 33 tatsächlich nur eine einzige Spur abtastet, daß aber im Falle einer stereophonen Aufzeichnung beziehungsweise Wiedergabe der Magnetkopf 28 mit zwei getrennten Arbeitsspalten je Spurbereich 32 bzw. 33 zwei im betreffenden Spurbereich nebeneinanderliegende Spuren abtastet. In Fig.2 sind zwei kassettenseitige Bandführungen 34 und 35 mit strichpunktierten Linien angedeutet, die für die nötige Umschlingung des Magnetkopfes 28 durch das Magnetband 3 sorgen.

Der Magnetkopf 28 wird von einem um die Wendeachse 30 verdrehbaren Kopfträger 36 getragen. Der Kopfträger 36 weist eine zylindrische Trägerscheibe 37 auf, die eine äußere zylindrische Lagerfläche 38 aufweist. Von einer Seitenfläche 39 der Trägerscheibe 37 stehen zwei blockförmige Fortsätze 40 und 41 in Richtung der Wendeachse 30 ab. An diesen beiden Fortsätzen 40 und 41 ist eine Platte 42 mit Hilfe von zwei Schrauben 43 und 44 befestigt. An der Platte 42 ist der Magnetkopf 28 beispielsweise durch Schweißen befestigt. Auf diese Weise ist der Magnetkopf 28 mit der Trägerscheibe 37 des Kopfträgers 36 verbunden.

Das Magnetbandgerät 1 weist auf der Trägerplatte 23 eine Lagereinrichtung 45 mit einer Lageröffnung 46 zur drehbaren Lagerung des Kopfträgers 36 auf. Die Lagereinrichtung 45 besteht dabei zum Teil aus der Trägerplatte 23 selbst und aus einem mit der Trägerplatte 23 verbundenen, im wesentlichen scheibenförmigen Lagerteil 47. Der Lagerteil 47 ist im Bereich seiner dem Magnetkopf 28 zugewandten Seitenfläche 48 mit zwei spiegelbildlich zueinander angeordneten Lagerleisten 49 und 50 versehen, die in ihrem von der Trägerplatte 23 abgewandten Bereich zueinander hin abgewinkelt ausgebildet sind. In ihrem senkrecht zur Trägerplatte 23 verlaufenden Bereich weisen die beiden Lagerleisten 49 und 50 je eine geradlinig verlaufende, im Querschnitt etwa halbkreisförmig abgerundete Lagerrippe 51 bzw. 52 auf, deren halbkreisförmige Begrenzungswände 53 und 54 je eine senkrecht zu den beiden Bandläufrichtungen 26 und 27 verlaufende Begrenzungswand der Lageröffnung 46 bilden, in der die Trägerscheibe 37 drehbar gelagert ist. Zwei weitere Begrenzungswände 55 und 56 der Lageröffnung 46 sind an den zueinander hin abgewinkelt ausgebildeten Bereichen der Lagerleisten 49 und 50 vorgesehen. Eine weitere Begrenzungswand 57 der Lageröffnung 46 ist durch einen Teil der dem Magnetkopf 28 zugewandten Wand der Trägerplatte 23 gebildet. Diese Begrenzungswand 57 der Lageröffnung 46 verläuft in Richtung der beiden Bandlaufrichtungen 26 und 27. In der durch die vorerwähnten Begrenzungswände 53, 54, 55, 56 und 57 begrenzten Lageröffnung 46 ist der Kopfträger 36 mit dessen Trägerscheibe 37 mit Spiel drehbar gelagert. Dieses Spiel beträgt in der Praxis etwa ein Zehntelmillimeter. Wie aus Fig .3 ersichtlich ist, ist die Lagereinrichtung im Bereich der Lageröffnung 46 mit Freistellungen 58, 59, 60, 61 und 62 für den Kopfträger 36, und zwar für dessen Trägerscheibe 37, versehen, so daß der Kopfträger 36 mit seiner Trägerscheibe 37 nur an vorgegebenen Lagerstellen in der Lageröffnung 46 im Querschnitt der Lageröffnung gesehen punktförmig anliegt, worauf nachfolgend noch näher eingegangen wird. Zur Begrenzung der axialen Bewegbarkeit des Kopfträgers 36 wirkt mit dessen Trägerscheibe 37 eine von der Trägerplatte 23 abstehende Leiste 63 zusammen.

Der Kopfträger 36 weist an der von dem Magnetkopf 28 abgewandten Seitenfläche 64 der Trägerscheibe 37 einen zu derselben koaxialen zylindrischen ersten Positionierzylinder 65 auf. Mit diesem ersten Positionierzylinder 65 ist ein zu demselben koaxiales Zahnrad 66 verbunden. Mit dem Zahnrad 66 ist ein zu demselben koaxialer zweiter Positionierzylinder 67 kleineren Durchmessers verbunden. Durch die Trägerscheibe 37, den ersten Positionierzylinder 65, das Zahnrad 66 und den zweiten Positionierzylinder 67 führt eine Bohrung 68 hindurch, die sich in der Trägerscheibe 37 zum Magnetkopf 28 hin kegelförmig erweitert. Durch die Bohrung 68 sind nicht dargestellte Anschlußleitungen zu dem Magnetkopf 28 hindurchgeführt.

Wie erwähnt, ist der Magnetkopf 28 um 180° zwischen zwei Abtastpositionen wendbar. Dementsprechend ist der Kopfträger 36 ebenfalls um 180° zwischen zwei Betriebslagen verdrehbar. Diese beiden Betriebslagen sind mit Hilfe von zwei im Gerät vorgesehenen justierbaren Positionierschrauben 69 und 70 festgelegt, an deren freien Enden sich je nach Betriebslage des Kopfträgers 36 ein vom ersten Positionierzylinder 65 in radialer Richtung abstehender Positionierfortsatz 71 abstützt, wie dies für jene Betriebslage des Kopfträgers 36, die der Betriebsart "Normaler Vorlaufentspricht, in den Figuren 2 und 3 dargestellt ist. Die Positionierschrauben 69 und 70 sind je in einen plattenförmigen Fortsatz 72 bzw. 73 des Lagerteiles 47 eingeschraubt. Die beiden Fortsätze 72 und 73 stehen von dem Lagerteil 47 an dessen von dem Magnetkopf 28 abgewandter Seitenfläche 74 in Richtung der Wendeachse 30 ab.

Zum Wenden des Magnetkopf es 28 und des Kopfträgers 36 weist das Gerät 1 eine Verstelleinrichtung 75 für den Kopfträger 36 auf, die in Fig.1 dargestellt ist. Die Verstelleinrichtung 75 weist ein auf nicht dargestellte Weise motorisch in entgegengesetzten Drehrichtungen antreibbares Zahnrad 76 auf. Das Zahnrad 76 kämmt mit einer am Chassis 10 in ihrer Längsrichtung verschiebbar geführten Zahnstange 77, die zwischen zwei schematisch angedeuteten Begrenzungsanschlägen 78 und 79 hin und her verschiebbar ist. Auf einen von der Zahnstange 77 abstehenden Zapfen 80 ist eine Schenkelfeder 81 aufgesetzt, zwischen deren zwei Schenkel 82 und 83 ein von der Zahnstange 77 abstehender Stift 84 ragt, wodurch die Schenkelfeder 81 positioniert wird. Die beiden Schenkel 82 und 83 der Schenkelfeder 81 sind bestrebt, sich aufeinander zu zu bewegen. Weiters ragt zwischen die beiden Schenkel 82 und 83 der Schenkelfeder 81 ein weiterer Stift 85, der mit einer auf der Trägerplatte 23 in ihrer Längsrichtung verschiebbar geführten Zahnstange 86 verbunden ist. Die Zahnstange 86 steht in Eingriff mit dem Zahnrad 66 des Kopfträgers 36.

Das Wenden das Magnetkopfes 28 ist in bekannter Weise nur dann möglich, wenn der Magnetkopf 28 aus der in Fig.1 dargestellten Abtastposition in Richtung des Pfeiles 87 so weit verstellt ist, daß derselbe aus der Kassette 2 herausgezogen ist. Diese Verstellung des Magnetkopf es 28 wird durch Verstellen der Trägerplatte 23 in Richtung des Pfeiles 87 erreicht, wie dies für einen Teil der Trägerplatte 23 und das den Stift 85 tragende Ende der Zahnstange 86 in Fig.1 mit strichpunktierten Linien angedeutet ist. Wie aus dieser strichpunktierten Darstellung ersichtlich ist, liegt auch bei verstellter Trägerplatte 23 der Stift 85 zwischen den beiden Schenkeln 82 und 83 der Schenkelfeder 81, so daß bei verstellter Trägerplatte 23 eine Kraftübertragung vom motorisch angetriebenen Zahnrad 76 und der Zahnstange 77 über die Schenkelfeder 81 auf den Stift 85 und folglich die Zahnstange 86, das Zahnrad 66 und den Kopfträger 36 gewährleistet ist. Vor dem Wenden des Magnetkopfes 28 wird daher die Trägerplatte 23 in Richtung des Pfeiles 87 verstellt und nach erfolgtem Wenden des Magnetkopf es 28 wird die Trägerplatte 23 entgegen der Richtung des Pfeiles 87 zurückverstellt. Wie diese Verstellung der Trägerplatte 23 erfolgt, ist für die vorliegende Erfindung nicht wesentlich und daher nicht dargestellt.

Zum zusätzlichen Positionieren des Kopfträgers 36 in seinen beiden Betriebslagen ist derselbe mit dem ersten koaxialen Positionierzylinder 65 und dem zweiten koaxialen Positionierzylinder 67 verbunden. Zum Zusammenwirken mit dem ersten Positionierzylinder 65 sind zwei senkrecht zu den beiden Bandlaufrichtungen 26 und 27 verlaufende, im Querschnitt etwa halbkreisförmig ausgebildete Positionierrippen 88 und 89 vorgesehen. Die Positionierrippen 88 und 89 sind an zwei von den plattenförmigen Fortsätzen 72 und 73 des Lagerteiles 47 in Richtung zu der Trägerplatte 23 hin abstehenden Blöcken 90 und 91 vorgesehen. Der zweite koaxiale Positionierzylinder 67 ragt durch einen langlochförmigen Durchbruch 92, der in einer von der Trägerplatte 23 senkrecht abstehenden Positionierplatte 93 vorgesehen ist.

Im folgenden ist das Wenden des Magnetkopfes 28 beschrieben. Es wird davon ausgegangen, daß der Magnetkopf 28 jene Abtastposition einnimmt, die in den Figuren 1 bis 3 nicht dargestellt ist und in der sein Magnetspalt 31 den Spurbereich 33 abtastet, wobei sich dann die Zahnstange 77 in der in Figur 1 mit einer strichpunktierten Linie angedeuteten Lage befindet, in der sie sich am Begrenzungsanschlag 79 abstützt. Zuerst wird die Trägerplatte 23 in Richtung des Pfeiles 87 verschoben, so daß der Magnetkopf 28 aus der Kassette 2 herausgezogen wird. Danach wird das Zahnrad 76 gemäß Fig.1 im Uhrzeigersinn angetrieben, wodurch die Zahnstange 77 in ihre in Fig.1 mit vollen Linien dargestellte Position verschoben wird, in der sie sich am Begrenzungsanschlag 78 abstützt. Dabei wird über die Schenkelfeder 81, und zwar über ihren Schenkel 83, unter Spannen der Schenkelfeder 81 der Stift 85 verstellt, so daß die Zahnstange 86 in Richtung des Pfeiles 94 verschoben wird. Hiedurch wird das Zahnrad 66 gemäß Fig.3 entgegen dem Uhrzeigersinn verdreht. Auf diese Weise wird auch der Kopf träger 36 entgegen dem Uhrzeigersinn verdreht, und zwar so lange, bis der Positionierfortsatz 71 sich am freien Ende der positionierschraube 70 abstützt. Wenn dies der Fall ist, hat der Kopfträger 36 seine Betriebslage erreicht, in der dann der Magnetkopf 28 jene Abtastposition einnimmt, in der er mit seinem Magnetspalt 31 den Spurbereich 32 abtasten kann. Danach wird die Trägerplatte 23 entgegen der Richtung des Pfeiles 87 zurückverstellt, wobei dann der Magnetkopf 28 wieder in die Kassette 2 eintaucht und mit dem Magnetband 3 in Abtastverbindung tritt. Diese Betriebssituation ist in den Figuren 1 bis 3 dargestellt.

In der in den Figuren 1 bis 3 dargestellten Betriebssituation übt die an der Zahnstange 77 abgestützte Schenkelfeder 81 mit ihrem Schenkel 83 über den Stift 85 auf die Zahnstange 86 stets eine Kraft aus, die die Zahnstange 86 in Richtung des Pfeiles 94 belastet. Die Schenkelfeder 81 bildet somit eine Belastungseinrichtung, die die Zahnstange 86 bei der vorliegenden Betriebslage des Kopf trägers 36 stets in Richtung des Pfeiles 94 belastet. Durch diese Belastung mit der Schenkelfeder 81 wird von der Zahnstange 86 auf das Zahnrad 66 stets eine Kraft ausgeübt. Durch diese Kraft wird der Positionierfortsatz 71 gegen das freie Ende der Positionierschraube 70 gedrückt. Weiters wird durch diese Kraft der erste Positionierzylinder 65 gegen die Positionierrippe 88 gedrückt. Weiters wird durch diese Kraft der zweite Positionierzylinder 67 gegen die der Trägerplatte 23 zugewandte Begrenzungswand 95 des Durchbruches 92 in der Positionierplatte 93 gedrückt. Durch das von der Zahnstange 86 her bewirkte Andrücken des Positionierfortsatzes 71 an das freie Ende der Positionierschraube 70 entsteht ein auf den Kopfträger 36 einwirkendes Drehmoment, durch das die Trägerscheibe 37 des Kopfträgers 36 mit ihrer Lagerfläche 38 gegen die an der Trägerplatte 23 ausgebildete Begrenzungswand 57 der Lageröffnung 46 gedrückt wird, wobei die Trägerscheibe 37 des Kopfträgers 36 und die Begrenzungswand 57 der Lageröffnung 46 der Lagereinrichtung 45 an einer Lagerstelle 96 aneinander liegen, die im Querschnitt der Lageröffnung 46 gesehen punktförmig ausgebildet ist. Durch das von der Zahnstange 86 her bewirkte Andrücken des ersten Positionierzylinders 65 an die Positionierrippe 88 entsteht ein weiteres auf den Kopfträger 36 einwirkendes Drehmoment, durch das die Trägerscheibe 37 des Kopfträgers 36 mit ihrer Lagerf läche 38 gegen die Begrenzungswand 54 der Lagerrippe 52 gedrückt wird, wobei die Trägerscheibe 37 des Kopf trägers 36 und die Begrenzungswand 54 der Lagerrippe 52 an einer Lagerstelle 97 aneinander liegen, die im Querschnitt der Lageröffnung 46 gesehen ebenfalls punktförmig ausgebildet ist.

Auf die vorstehend beschriebene Weise ist der Kopfträger 36 exakt in seiner Betriebslage positioniert. In dieser Betriebslage wird der Kopfträger 36 mit der Lagerfläche 38 seiner Trägerscheibe 37 ausschließlich gegen die beiden vorgegebenen Lagerstellen 96 und 97 gedrückt. Da der Kopfträger 36 jedesmal, wenn er in diese Betriebslage verdreht wird, an den beiden vorgegebenen, im Querschnitt punktförmigen Lagerstellen 96 und 97 anliegt, ist gewährleistet, daß der Kopfträger 36 auf eindeutig reproduzierbare Weise in stets dieselbe durch die beiden vorgegebenen Lagerstellen 96 und 97 festgelegte Betriebslage gebracht wird. Hiedurch ist erreicht, daß der von dem Kopfträger 36 getragene Magnetkopf 28 auf eindeutig reproduzierbare Weise in stets dieselbe Abtastposition gebracht wird, so daß stets gleichbleibend gute Abtastverhältnisse durch den Magnetkopf 28 gewährleistet sind.

Wie aus den Figuren 2 und 3 ersichtlich ist, läuft das Magnetband 3 in der dargestellten Betriebslage des Kopfträgers 36 in der Bandlauf richtung 26 über den Magnetkopf 28. Dabei übt das Magnetband 3 auf den Magnetkopf 28 eine Reibkraft aus. Diese Reibkraft verläuft in der Bandlaufrichtung 26 und hat über den Magnetkopf 28 ein auf den Kopfträger 36 einwirkendes Drehmoment zur Folge, welches das von der Schenkelfeder 81 her bewirkte Andrücken des Kopfträgers 36 mit seiner Trägerscheibe 37 an die Lagerstelle 97 in der Lageröffnung 46 unterstützt. Hiedurch ist gewährleistet, daß der Magnetkopf 28 auch bei einer hohen auf den Magnetkopf 28 einwirkenden Reibkraft stets sicher in seiner Abtastposition verbleibt.

In der zu der vorstehend beschriebenen, in den Figuren 1 bis 3 dargestellten Betriebslage gewendeten, nicht dargestellten Betriebslage des Kopfträgers 36 übt die als Belastungseinrichtung vorgesehene Schenkelfeder 81 auf die Zahnstange 86 stets eine Kraft entgegen der Richtung des Pfeiles 94 aus. Dadurch wird von der Zahnstange 86 auf das Zahnrad 66 des Kopfträgers 36 stets eine Kraft ausgeübt, durch die der Positionierfortsatz 71 gegen das freie Ende der anderen Positionierschraube 69, der erste Positionierzylinder 65 gegen die andere Positionierrippe 89 und der zweite Positionierzylinder 67 wieder gegen die Begrenzungswand 95 des Durchbruches 92 in der Positionierplatte 93 gedrückt wird. Weiters wird dabei die Trägerscheibe 37 des Kopf trägers 36 gegen die Begrenzungswand 57 der Lageröffnung 46 und gegen die Begrenzungswand 53 der anderen Lagerrippe 51 in der Lageröffnung 46 gedrückt, wobei dann die Trägerscheibe 37 des Kopfträgers 36 wieder ausschließlich an zwei vorgegebenen, im Querschnitt punktförmigen Lagerstellen an der Lagereinrichtung 45, nämlich an der Lagerstelle 96 und an einer weiteren Lagerstelle 98 an der Begrenzungswand 53 der Lagerrippe 51, anliegt, so daß auch in dieser Betriebslage des Kopfträgers 36 die vor stehend beschriebenen Vorteile erreicht werden.

Bei dem in Fig.4 schematisch dargestellten Ausführungsbeispiel besteht der Kopfträger 36 für den Magnetkopf 28 aus einer zylindrischen Trägerscheibe 37, die mit einem koaxialen Zahnrad 66 zum Verdrehen des Kopfträgers 36 verbunden ist. Der Magnetkopf 28 ist dabei in eine seine Seitenflächen teilweise aufnehmende Ausnehmung in der Trägerscheibe 37 klemmend und spielfrei eingesetzt. Die Lagereinrichtung 45 ist durch einen mit der Trägerplatte 23 verbundenen blockförmigen Lagerteil 47 gebildet, der eine durch drei ebene Begrenzungswände 99, 100 und 101 begrenzte Lageröffnung 46 aufweist, in der der Kopfträger 36 mit seiner Trägerscheibe 37 mit Spiel drehbar gelagert ist. Die Lagereinrichtung 45 ist auch bei diesem Gerät im Bereich der Lageröffnung 46 mit Freistellungen 102, 103, 104 und 105 für den Kopfträger 36 versehen. Die Verstelleinrichtung 75 weist einen analogen Aufbau wie die Verstelleinrichtung des Gerätes gemäß den Figuren 1 bis 3 auf, wobei als Belastungseinrichtung ebenfalls eine Schenkelfeder 81 vorgesehen ist. Zum Positionieren des Kopfträgers 36 in seinen beiden Betriebslagen steht von der Trägerscheibe 37 in Richtung der Wendeachse 30 ein Positionierstift 106 ab, der in jeder der beiden Betriebslagen mit einem vom Lagerteil 47 abstehenden Positionierblock 107 bzw. 108 zusammenwirkt.

In der in Fig.4 dargestellten Betriebssituation, in der das Magnetband 3 entsprechend der Betriebsart "Normaler Vorlauf" in der Bandlauf richtung 26 entlang dem Magnetkopf 28 fortbewegt wird und der Kopfträger 36 eine dieser Betriebsart entsprechende Betriebslage einnimmt, übt die als Belastungseinrichtung vorgesehene Schenkelfeder 81 mit ihrem Schenkel 83 über den Stift 85 auf die Zahnstange 86 eine Kraft aus, die danach trachtet, die Zahnstange 86 in Richtung des Pfeiles 109 zu verschieben. Auf diese Weise wird von der Zahnstange 86 auf das an dem Kopfträger 36 koaxial vorgesehene Zahnrad 66 eine Kraft ausgeübt, durch die die Trägerscheibe 37 mit ihrer umfangsseitigen Lagerfläche 38 an die Begrenzungswände 101 und 100 der Lageröffnung 46 angedrückt wird, und zwar an zwei im Querschnitt punktförmige Lagerstellen 110 und 111. Weiters wird durch diese auf das Zahnrad 66 ausge übte Kraft der Positionierstift 106 gegen den Positionierblock 107 gedrückt, wodurch der Kopfträger 36 in seiner Betriebslage positioniert wird. Durch dieses Andrük-ken des Positionierstiftes 106 an den Positionierblock 107 entsteht ein auf den Kopfträger 36 einwirkendes Drehmoment, durch das die Trägerscheibe 37 mit ihrer Lagerfläche 38 gegen die Begrenzungswand 100 der Lageröffnung 46 gedrückt wird, wodurch das vorerwähnte Andrücken des Lagerteiles 37 an die im Querschnitt punktförmige Lagerstelle 111 unterstützt wird. Auf diese Weise wird auch in diesem Fall der Kopfträger 36 in seiner Betriebslage mit seiner Lagerfläche 38 ausschließlich gegen zwei vorgegebene Lagerstellen 110 und 111 in der Lageröffnung 46 gedrückt, so daß der Kopträger 36 immer auf eindeutig reproduzierbare Weise in stets dieselbe Betriebslage gebracht wird. Hiedurch nimmt der von dem Kopfträger 36 getragene Magnetkopf 28 auf eindeutig reproduzierbare Weise stets dieselbe Abtastposition ein. Auch bei diesem Gerät übt in der in Fig.4 dargestellten Betriebssituation das über den Magnetkopf 28 in der Bandlaufrichtung 26 laufende Magnetband 3 auf den Magnetkopf 28 eine Reibkraft aus, die ein auf den Kopfträger 36 einwirkendes Drehmoment zur Folge hat, das das Andrük-ken des Kopfträgers 36 an die Lagerstelle 110 und aufgrund des geneigten Verlaufes der Begrenzungswand 101 auch an die Lagerstelle 111 unterstützt, so daß der Kopfträger 36 auch bei einer hohen auf den Magnetkopf 28 einwirkenden Reibkraft stets sicher in seiner Betriebslage verbleibt.

Wenn der Kopfträger in seine andere Betriebslage verdreht ist, wobei dann der Magnetkopf 28 seine gegenüber der in Fig.4 dargestellten Abtastposition gewendete Abtastposition zum Abtasten des Spurbereiches 33 einnimmt, dann belastet die Schenkelfeder 81 mit ihrem Schenkel 82 über den Stift 85 die Zahnstange 86 entgegen der Richtung des Pfeiles 109. Hiedurch wird von der Zahnstange 86 auf das Zahnrad 66 eine Kraft ausgeübt, die auf analoge Weise wie zuvor beschrieben bewirkt, daß in diesem Fall der Kopfträger 36 mit seiner Trägerscheibe 37 ausschließlich an einer an der Begrenzungswand 99 vorgesehenen, im Querschnitt punktförmigen Lagerstelle 112 und wieder an der an der Begrenzungswand 100 vorgesehenen, im Querschnitt punktförmigen Lagerstelle 111 anliegt. Hiedurch ist auch in diesem Fall der Kopfträger 36 auf eindeutig reproduzierbare Weise in stets dieselbe Betriebslage bringbar. Auch in dieser Betriebslage des Kopfträgers 36 unterstützt die von dem Magnetband 3 auf den Magnetkopf 28 ausgeübte Reibkraft, die in diesem Fall in der Bandlaufrichtung 27 wirksam ist, das Andrücken des Kopfträgers 36 an die betreffenden Lagerstellen 112 und 111.

Bei dem in Fig.5 schematisch dargestellten Ausführungsbeispiel besteht der Kopfträger 36 für den Magnetkopf 28 aus einer zylindrischen Trägerscheibe 37, an der der Magnetkopf 28 durch Festklemmen in einer Ausnehmung derselben festgehalten ist. Die Trägerscheibe 37 ist mit einem koaxialen Seilzylinder 113 zum Verdrehen des Kopfträgers 36 verbunden. Um den Seilzylinder 113 ist ein Seil 114 einer Verstelleinrichtung 75 mehrfach herumgeschlungen, wobei das Seil 114 in seinem mittleren Bereich mit einem Klemmstift 115 an dem Seilzylinder 113 festgeklemmt ist. Die Enden des Seiles 114 sind je mit einem Ende einer Zugfeder 116 bzw. 117 verbunden. Die beiden Zugfedern 116 und 117 bilden je eine Belastungseinrichtung zum Belasten des Kopfträgers 36 in dessen Betriebslagen. Die anderen Enden der Zugfedern 116 und 117 sind je mit dem abgewinkelten Ende 118 bzw. 119 eines an der Trägerplatte 23 verstellbar geführten Verstellschiebers 120 der Verstelleinrichtung 75 verbunden. Der Verstellschieber 120 ist auf nicht dargestellte Weise motorisch zwischen zwei an der Trägerplatte 23 vorgesehenen Begrenzungsanschlägen hin und her verschiebbar, von denen in Fig.5 nur ein Begrenzungsanschlag 121 dargestellt ist.

Die Lagereinrichtung 45 ist durch einen mit der Trägerplatte 23 verbundenen blockförmigen Lagerteil 47 gebildet, dessen Lageröffnung 46 durch vier Begrenzungswände 122, 123, 124 und 125 begrenzt ist. Die Lagereinrichtung 45 ist auch bei diesem Gerät im Bereich der Lageröffnung 46 mit Freistellungen 126, 127, 128 und 129 für den Kopfträger 36 versehen. In Fig .5 sind jene Elemente der Lagereinrichtung, mit der die axiale Bewegbarkeit des Kopf trägers 36 begrenzt ist, der Einfachheit halber nicht dargestellt. An den Begrenzungswänden 123, 124 und 125 der Lageröffnung 46 ist je eine halbzylindrische, in Richtung der Wendeachse 30 verlaufende Lagerrippe 130, 131 und 132 vorgesehen, deren Scheitelstellen je eine Lagerstelle 133, 134 und 135 für die Trägerscheibe 37 des Kopfträgers 36 bilden, zwischen denen die Trägerscheibe 37 mit Spiel drehbar gelagert ist. Zum Positionieren des Kopfträgers 36 steht von demselben ein Positionierstift 106 ab, der in jeder Betriebslage des Kopfträgers 36 mit dem freien Ende einer Positionierschraube 69 bzw. 70 zusammenwirkt.

In der in Fig .5 dargestellten Betriebssituation, in der das Magnetband 3 entsprechend der Betriebsart "Normaler Rücklauf" in der Bandlauf richtung 27 entlang dem Magnetkopf 28 fortbewegt wird und der Kopfträger 36 eine dieser Betriebsart entsprechende Betriebslage einnimmt, befindet sich der Verstellschieber 120 der Verstelleinrichtung 75 in Anlage an dem Begrenzungsanschlag 121, wobei dann die als Belastungseinrichtung vorgesehene Zugfeder 116 gespannt ist und die als Belastungseinrichtung vorgesehene andere Zugfeder 117 entspannt ist. Von der gespannten Zugfeder 116 wird über das Seil 114 auf den Seilzylinder 113 eine Kraft ausgeübt. Durch diese Kraft wird die Trägerscheibe 37 des Kopfträgers 36 mit ihrer Lagerfläche 38 gegen die Lagerstellen 133 und 134 an den Lagerrippen 130 und 131 gedrückt und der Positionierstift 106 gegen das freie Ende der Positionierschraube 69 gedrückt. Durch das Andrücken des Positionierstiftes 106 an das freie Ende der Positionierschraube 69 entsteht ein auf den Kopfträger 36 einwirkendes Drehmoment, durch das das Andrücken der Trägerscheibe 37 mit ihrer Lagerfläche 38 an die Lagerstelle 134 an der Lagerrippe 131 unterstützt wird. Auf diese Weise ist auch in diesem Fall der Kopfträger 36 in seiner Betriebslage mit seiner Lagerfläche 38 ausschließlich gegen zwei vorgegebene, im Querschnitt punktförmige Lagerstellen, nämlich die Lagerstellen 133 und 134, gedrückt. Hiedurch ist gewährleistet, daß auf eindeutig reproduzierbare Weise der Kopfträger 36 stets in dieselbe Betriebslage gebracht wird, so daß der Magnetkopf 28 stets dieselbe Abtastposition einnimmt. Auch bei diesem Gerät übt in der in Fig.5 dargestellten Betriebssituation das über den Magnetkopf 28 in der Bandlaufrichtung 27 laufende Magnetband 3 auf den Magnetkopf 28 eine Reibkraft aus, die ein auf den Kopfträger 36 einwirkendes Drehmoment zur Folge hat, das das Andrücken des Kopf trägers 36 an die Lagerstelle 133 an der Lagerrippe 130 unterstützt, so daß der Kopfträger 36 auch bei einer hohen auf den Magnetkopf 28 einwirkenden Reibkraft stets sicher in seiner Betriebslage verbleibt.

Wenn der Kopfträger 36 in seine andere Betriebslage verdreht wird, was durch Verschieben des Verstellschiebers 120 in Richtung des Pfeiles 136 erfolgt, dann ist danach die andere als Belastungseinrichtung vorgesehene Zugfeder 117 gespannt, jedoch die Zugfeder 116 entspannt. In diesem Fall wird dann von der gespannten Zugfeder 117 über das Seil 114 auf den Seilzylinder 113 eine Kraft ausgeübt. Durch diese Kraft wird die Trägerscheibe 37 mit der Lagerfläche 38 gegen die Lagerstellen 135 und 134 an den Lagerrippen 132 und 131 gedrückt und der Positionierstift 106 gegen das freie Ende der positionierschraube 70 gedrückt. Durch das Andrücken des Positionierstiftes 106 an das freie Ende der Positionierschraube 70 entsteht ein auf den Kopfträger 36 einwirkendes Drehmoment, durch das das Andrücken der Trägerscheibe 37 mit ihrer Lagerfläche 38 gegen die Lagerstelle 134 an der Lagerrippe 131 unterstützt wird. Auf diese Weise ist auch in diesem Fall der Kopfträger 36 in seiner Betriebslage ausschließlich gegen zwei vorgegebene, im Querschnitt punktförmige Lagerstellen, nämlich die Lagerstellen 134 und 135, gedrückt. Hiedurch ist wieder gewährleistet, daß auf eindeutig reproduzierbare Weise der Kopfträger 36 stets in dieselbe Betriebslage gebracht wird, so daß der Magnetkopf 28 stets dieselbe Abtastposition einnimmt. Auch in dieser Betriebslage des Kopf trägers 36 unterstützt die von dem Magnetband 3 auf den Magnetkopf 28 ausgeübte Reibkraft, die in diesem Fall in der Bandlaufrichtung 26 wirksam ist, das Andrücken des Kopfträgers 36 an die betreffende Lagerstelle 135.

Bei dem in Fig.6 schematisch dargestellten Ausführungsbeispiel besteht der Kopf träger 36 für den Magnetkopf 28 aus einer zylindrischen Trägerscheibe 37, die mit einem koaxialen Zahnrad 66 zum Verdrehen des Kopfträgers 36 verbunden ist. Der Magnetkopf 28 ist auch hier beispielsweise in einer Ausnehmung der Trägerscheibe 37 festgeklemmt. Die Lagereinrichtung 45 ist durch einen mit der Trägerplatte 23 verbundenen blockförmigen Lagerteil 47 gebildet. In dem Lagerteil 47 ist eine Lageröffnung 46 vorgesehen, die durch zwei ebene Begrenzungswände 137 und 138 und durch eine im wesentlichen halbkreisförmig ausgebildete Begrenzungswand 139 begrenzt ist. In dieser Lageröffnung 46 ist die Trägerscheibe 37 des Kopfträgers 36 mit Spiel drehbar gelagert. In Fig.6 sind jene Elemente der Lagereinrichtung, mit der die axiale Bewegbarkeit des Kopfträgers 36 begrenzt ist, der Einfachheit halber nicht dargestellt. Die Lagereinrichtung 45 ist auch bei diesem Gerät im Bereich der Lageröffnung 46 mit Freistellungen 140, 141 und 142 für den Kopfträger 36 versehen. Zum Positionieren des Kopfträgers 36 in seinen beiden Betriebslagen steht von demselben ein Positionierstift 106 ab, der in jeder Betriebslage des Kopfträgers mit dem freien Ende einer Positionierschraube 69 bzw. 70 zusammenwirkt.

Die Verstelleinrichtung 75 zum Verdrehen des Kopfträgers 36 weist bei diesem Gerät einen am Lagerteil 47 der Lagereinrichtung 45 um eine Welle 143 verschwenkbaren Verstellhebel 144 auf. Ein Arm 145 des Verstellhebels 144 ist von einer nicht dargestellten Antriebseinrichtung des Gerätes her in Richtung des Doppelpfeiles 146 verschwenkbar. Nach dem jeweiligen Verschwenken des Armes 145 durch die nicht dargestellte Antriebseinrichtung ist diese Antriebseinrichtung von dem Arm 145 des Verstellhebels 144 entkoppelt. Der andere Hebelarm 147 ist kreissektorförmig ausgebildet und weist an seinem freien Ende eine Verzahnung 148 auf, die mit dem an dem Kopfträger 36 koaxial vorgesehenen Zahnrad 66 in Eingriff steht. Durch Verschwenken des Verstellhebels 144 ist über seine Verzahnung 148 das Zahnrad 66 verdrehbar und auf diese Weise der Kopfträger 36 zwischen seinen beiden Betriebslagen durch Verdrehen um die Wendeachse 30 wendbar. Als Belastungseinrichtung ist in diesem Fall eine Schenkelfeder 149 vorgesehen, deren beide Schenkel 150 und 151 bestrebt sind, sich voneinander weg zu bewegen, und die in vorliegendem Fall als Totpunktfeder wirksam ist, die beim Wenden des Kopfträgers 36 zuerst gespannt und dann wieder entspannt wird. Die freien Enden der beiden Schenkel 150 und 151 der Schenkelfeder 149 sind V-förmig abgewinkelt ausgebildet. Der eine Schenkel 150 greift mit seinem freien Ende an einem zur Wendeachse 30 des Kopfträgers 36 exzentrisch am Zahnrad 66 des Kopfträgers 36 angeordneten Stift 152 an. Der andere Schenkel 151 greift mit seinem freien Ende an einem vom kreissektorförmigen Hebelarm 147 des Verstellhebels 144 abstehenden weiteren Stift 153 an.

In der in Fig.6 dargestellten Betriebssituation, in der das Magnetband 3 entsprechend der Betriebsart "Normaler Vorlauf" in der Bandlaufrichtung 26 entlang dem Magnetkopf 28 fortbewegt wird und der Kopfträger 36 eine dieser Betriebsart entsprechende Betriebslage einnimmt, wird von der als Belastungseinrichtung vorgesehenen Schenkelfeder 149 über den Stift 152 auf den Kopfträger 36 eine Kraft ausgeübt, die bewirkt, daß die Trägerscheibe 37 des Kopfträgers 36 mit ihrer Lagerfläche 38 gegen zwei vorgegebene, im Querschnitt punktförmige Lagerstellen 154 und 155 an den beiden ebenen Begrenzungswänden 137 und 138 der Lageröffnung 46 gedrückt wird. Durch die von der Schenkelfeder 149 über den Stift 152 auf den Kopfträger 36 ausgeübte Kraft wird auch der Positionierstift 106 gegen das freie Ende der Positionierschraube 70 gedrückt. Durch das Andrücken des positionierstiftes 106 an das freie Ende der Positionierschraube 70 entsteht ein auf den Kopfträger 36 einwirkendes Drehmoment, welches das Andrücken der Trägerscheibe 37 des Kopfträgers 36 mit ihrer Lagerfläche 38 an die beiden im Querschnitt punktförmigen Lagerstellen 154 und 155 unterstützt. Somit ist auch bei diesem Gerät der Kopfträger 36 in seiner Betriebslage mit seiner Lagerfläche 38 ausschließlich gegen zwei vorgegebene, im Querschnitt punktförmige Lagerstellen in der Lageröffnung 46, nämlich die beiden Lagerstellen 154 und 155, gedrückt, so daß der Kopfträger 36 auf eindeutig reproduzierbare Weise in stets dieselbe Betriebslage gebracht wird.

Wenn der Kopfträger 36 in seine andere Betriebslage verdreht wird, was durch Verschwenken des Verstellhebels 144 aus der in Fig.6 dargestellten Lage entgegen dem Uhrzeigersinn erfolgt, dann übt die als Belastungseinrichtung vorgesehene Schenkelfeder 149 über den Stift 152 auf den Kopfträger 36 eine Kraft aus, durch die der Kopfträger 36 in diesem Fall gegen dieselben beiden Lagerstellen 154 und 155 gedrückt wird. Weiters wird durch diese Kraft auch der Positionierstift 106 gegen das freie Ende der positionierschraube 69 gedrückt, wodurch auf analoge Weise ein auf den Kopfträger 36 einwirkendes Drehmoment entsteht, durch das das Andrücken des Kopfträgers 36 mit seiner Lagerfläche 38 an diese beiden Lagerstellen 154 und 155 unterstützt wird. Somit wird auch in diesem Fall der Kopfträger 36 auf eindeutig reproduzierbare Weise in stets dieselbe durch die beiden Lagerstellen 154 und 155 definierte Betriebslage gebracht.

## Ansprüche

1. Magnetbandgerät mit einem Magnetkopf, der im wesentlichen um 180° zwischen zwei Abtastpositionen wendbar ist, die je einer von zwei entgegengesetzten Bandlaufrichtungen zugeordnet sind und in denen der Magnetkopf je mindestens eine Spur eines Magnetbandes abtastet, mit einem den Magnetkopf tragenden verdrehbaren Kopfträger, mit einer Lagereinrichtung mit einer Lageröffnung in der der Kopf träger mit Spiel drehbar gelagert ist, mit einer Verstelleinrichtung für den Kopfträger, mit der zum Wenden des Magnetkopfes zwischen seinen beiden Abtastpositionen der Kopfträger zwischen zwei Betriebslagen verdrehbar ist, mit Positioniereinrichtungen am Kopfträger und im Gerät, mit denen der Kopfträger in seinen beiden Betriebslagen positioniert wird, und mit mindestens einer Belastungseinrichtung, die den Kopfträger in seinen beiden Betriebslagen mit einer Lagerfläche desselben in der Lageröffnung gegen die Lagereinrichtung drückt und die die Positioniereinrichtungen am Kopfträger und im Gerät gegeneinander drückt, dadurch gekennzeichnet, daß die Lagereinrichtung im Bereich der Lageröffnung mit Freistellungen für den Kopfträger versehen ist und daß in den beiden Betriebslagen des Kopfträgers derselbe mit seiner Lagerfläche ausschließlich gegen zwei vorgegebene Lagerstellen in der Lageröffnung gedrückt wird, wobei der Kopfträger und die Lagereinrichtung an den Lagerstellen im Querschnitt der Lageröffnung gesehen im wesentlichen punktförmig aneinander liegen.

2. Gerät nach Anspruch 1, dadurch gekennzeichnet, daß die Lageröffnung zumindest teilweise durch geradlinig verlaufende Begrenzungswände begrenzt ist, die den Kopfträger mit Spiel tangieren und an denen die vorgegebenen Lagerstellen vorgesehen sind.

3. Gerät nach Anspruch 2, dadurch gekennzeichnet, daß die Lageröffnung zwei senkrecht zu den beiden Bandlaufrichtungen verlaufende Begrenzungswände und eine parallel zu den beiden Bandlaufrichtungen verlaufende Begrenzungswand aufweist, an welchen drei Begrenzungswänden die vorgegebenen Lagerstellen vorgesehen sind.

4. Gerät nach einem der Ansprüche 1 bis 3, dadurch gekenn zeichnet, daß in den beiden Betriebslagen des Kopfträgers die von dem Magnetband auf den Magnetkopf ausgeübte Reibkraft das von der Belastungseinrichtung bewirkte Andrücken des Kopfträgers an mindestens eine der Lagerstellen in der Lageröffnung unterstützt.

FIG.1

FIG.6

FIG.2

FIG.3

FIG.4

FIG.5